# EUROPÄISCHE PATENTSCHRIFT

(11) **EP 3 027 920 B1**
(45) Veröffentlichungstag und Bekanntmachung des Hinweises auf die Patenterteilung: **06.09.2017**
(21) Anmeldenummer: 14757823.1
(22) Anmeldetag: 16.07.2014
(51) Int. Cl.: F16D 1/116, B23B 31/11, B23Q 3/00

(54) **ANKER- BZW. BOHRSTANGENVERBINDUNG**
ANCHOR ROD CONNECTION OR DRILL ROD CONNECTION
RACCORDEMENT DE TIGES D'ANCRAGE OU DE FORAGE

(30) Priorität: 31.07.2013 AT 2502013 U
(43) Veröffentlichungstag der Anmeldung: 08.06.2016
(73) Patentinhaber: Dywidag-Systems International GmbH, 4061 Pasching (AT)
(72) Erfinder: BÖHM, Karl, AT-4615 Holzhausen (AT); KARPELLUS, Walter, AT-6020 Innsbruck (AT)
(74) Vertreter: Cunow, Gerda
(86) Internationale Anmeldenummer: PCT/AT2014/000140
(87) Internationale Veröffentlichungsnummer: WO 2015/013730

(56) Entgegenhaltungen:
- EP-A1- 0 060 549
- WO-A1-2004/013531
- US-A- 1 889 870
- US-A- 2 783 809
- US-A- 4 706 997

## Beschreibung

Die vorliegende Erfindung bezieht sich auf eine Ankerstangen- bzw. Bohrstangenverbindung, umfassend zwei jeweils wenigstens einen mit einem Gewinde versehenen Endbereich aufweisende miteinander zu verbindende Anker- bzw. Bohrstangen, eine mit den Endbereichen der Anker- bzw. Bohrstangen wechselwirkende, von ihren freien Enden ausgehend jeweils ein zu den Gewinden der Anker- bzw. Bohrstangen komplementäres Innengewinde aufweisende Verbindungsmuffe sowie jeweils ein mit jeder Anker- bzw. Bohrstange und dem zugehörigen komplementären Innengewinde wechselwirkendes Sperrelement.

Für das miteinander Verbinden von zwei Anker- bzw. Bohrstangen miteinander existieren mehrere Möglichkeiten. So ist es beispielsweise möglich, ein voll ausgebildetes, mit einem Außengewinde versehenes Ende einer Anker- bzw. Bohrstange in ein hohl ausgebildetes, mit Innengewinde versehenes Ende einer zweiten Anker- bzw. Bohrstange durch Einschrauben zu verbinden oder aber am Außenumfang von zwei Anker- bzw. Bohrstangenenden eine Verbindungsmuffe anzuordnen und die Anker- bzw. Bohrstangenenden in den entsprechenden Muffenenden bzw. der Kupplungs- oder Verbindungsmuffe festzulegen. Beide Arten der Rohrverbindung leiden an dem Nachteil, dass, wenn die Anker- bzw. Bohrstangen einer Dreh- bzw. Dreh-Schlag-Bewegung in Richtung des Lösens der Gewindeverbindung unterworfen werden, die Schraubverbindung Gefahr läuft, unbeabsichtigt gelöst zu werden, worauf es geschehen kann, dass ein Teil einer Anker- bzw. Bohrstange, insbesondere jener Teil der Anker- bzw. Bohrstange, welcher mit der Bohrkrone verbunden ist, unwiederbringlich verloren ist, da er sich während des Bohrens von dem Teil des Gestänges, welches zu dem Bohrlochäußeren gerichtet ist, unbeabsichtigt löst und meist nachträglich nicht mehr festgelegt werden kann. Um ein derartiges unbeabsichtigtes Zerstören der Ankerstangenverbindung bzw. eines Bohrgestänges hintanzuhalten, wurden verschiedenste Verriegelungselemente bzw. Sperrelemente vorgeschlagen, um ein unbeabsichtigtes Lösen einer Gewindeverbindung hintanzuhalten.

So ist beispielsweise in der EP 0 587 131 A zwischen dem Außenumfang der jeweiligen zu verbindenden stangenförmigen Elemente und dem Innenumfang einer Kupplungsmuffe eine Vielzahl von Klemm- bzw. Verriegelungselementen vorgesehen, welche insbesondere durch aufeinander abgestimmte konusförmige Oberflächen eine entsprechende, sichere Verbindung der aneinander angrenzenden Rohrenden unter Vermittlung der Verbindungsmuffe ergeben sollen.

Auch der Einsatz von Verbindungsmuffen, welche in ihrem Inneren eine Mehrzahl von Verriegelungselementen und gegebenenfalls ein zusätzliches Sperrglied aufweisen, um das unbeabsichtigte Lösen der Verbindung von zwei im Wesentlichen stangenförmigen, kraftübertragenden Elementen zu verhindern ist, ist beispielsweise aus der EP 1 400 655 A bekannt. Bei einer derartigen Vorrichtung wird versucht, die Drehmomentübertragung über feststehende Mitnahmeelemente von der ausgebildeten Verriegelung zu entkoppeln und dadurch Kräfte sicher und nahezu verschleißfrei zu übertragen. Wenn es mit einer derartigen Vorrichtung gelingt, die Kraftübertragung aufgrund der festgelegten Ausbildung der Verbindung zu verbessern, so besteht immer noch das Bedürfnis sicherzustellen, dass nicht ein unbeabsichtigtes Lösen der die Kräfte übertragenden Stangen bzw. Gestänge stattfindet und wiederum der oben geschilderte Fall des Verlusts einer Bohrkrone mit gegebenenfalls einem Teil des Gestänges eintritt.

Noch bedeutend schwieriger wird das Sicherstellen, dass eine Verbindung nicht gelöst wird bzw. werden kann, wenn es sich um ein Gestänge handelt, welche beispielsweise für die Ausbildung eines Bohrlochs eingesetzt werden und nach Beendigung desselben aus dem Bohrloch gemeinsam mit der die Bohrarbeit verrichtenden Bohrkrone entfernt werden sollen, da bei einer derartigen Beanspruchung sehr häufig durch Ausüben einer Drehbewegung das Gestänge samt der Bohrkrone aus dem Bohrloch herausgezogen wird, wodurch nicht nur die Gefahr, dass ein Gewinde, welches zwischen einer Muffe bzw. Verbindungsmuffe und dem Gestänge besteht, weiter verschlechtert wird, relativ groß ist, sondern vor allem zu befürchten ist, dass eine neuerliche Verbindung bzw. ein neuerliches Einschrauben einer gelösten Verbindung nicht erfolgreich gelöst werden kann.

Die US 1,889,870 offenbart einen Ankerstangen- bzw.

Bohrstangenverbindung nach dem Oberbegriff von Anspruch 1. Die vorliegende Erfindung zielt nun darauf ab, eine Ankerstangen- bzw. Bohrstangenve bindung zur Verfügung zu stellen, mit welcher es gelingt, die Verbindung zwischen zwei Anker- bzw. Bohrstangen unter jeden Belastungen, insbesondere während eines Bohrens sicher und zuverlässig aufrecht zu erhalten, und ein unbeabsichtigtes Lösen der Verbindung hintanzuhalten.

Zur Lösung dieser Aufgabe ist die Erfindung im Wesentlichen dadurch gekennzeichnet, dass die Verbindungsmuffe in Abstand von einer Längsmittelebene derselben zu beiden Seiten derselben jeweils eine ringförmig verlaufende Vertiefung aufweist oder jeder Endbereich einer Anker- bzw. Bohrstange in Abstand von einem freien Ende derselben eine ringförmige Vertiefung aufweist, dass jede ringförmige Vertiefung eine zu der Längsmittelebene oder dem freien Bereich der Anker- bzw. Bohrstange gerichtete Vertiefung geringerer Tiefe und eine an die Vertiefung geringerer Tiefe in Richtung zu der Längsmittelebene der Verbindungsmuffe oder von den freien Enden der Anker- bzw. Bohrstange weiter als die Vertiefung geringerer Tiefe beabstandeten an die jeweilige ringförmige Vertiefung anschließende Nut größerer Tiefe als die ringförmige Vertiefung aufweist, dass das Sperrelement als in die Vertiefung einpassbarer Sperrring ausgebildet ist und dass ein Innendurchmesser des Sperrrings größer als ein Innendurchmesser der Nut und kleiner als ein Innendurchmesser der Vertiefung geringerer Tiefe ist. Dadurch, dass die Verbindungsmuffe in Abstand von einer Längsmittelebene derselben zu beiden Seiten jeweils eine ringförmig verlaufende Vertiefung aufweist oder jeder Endbereich einer Anker- bzw. Bohrstange in Abstand von einem freien Ende eine ringförmige Vertiefung aufweist, wobei jede ringförmige Vertiefung eine zu der Längsmittelebene oder dem freien Bereich der Anker- bzw. Bohrstange gerichteten Vertiefung geringerer Tiefe und eine an die Vertiefung geringerer Tiefe in Richtung zu der Längsmittelebene der Verbindungsmuffe oder den freien Enden der Anker- bzw. Bohrstange weiter als die ringförmige Vertiefung beabstandeten an die jeweilige ringförmige Vertiefung anschließende Nut größerer Tiefe als die ringförmige Vertiefung aufweist, wird in Abstand von dem freien Ende der Anker- bzw. Bohrstange oder in Abstand von einer Längsmittelebene der Verbindungsmuffe ein Aufnahmebereich geschaffen, in welchem das Sperrglied eingelegt werden kann. Indem weiterhin das Sperrglied so ausgebildet ist, dass es als in die Vertiefung einpassbarer Sperrring ausgebildet ist und dass ein Innendurchmesser des Sperrrings größer als ein Innendurchmesser der Nut und kleiner als der Innendurchmesser der Vertiefung ist, kann bei einem Einschrauben von beispielsweise einer Ankerstange in die Verbindungsmuffe das Sperrelement bzw. der Sperrring in das Innere der Muffe eingebracht werden, wobei das Äußere des Sperrrings in Anlage an dem komplementären Gewinde von entweder der Anker- bzw. Bohrstange oder der Verbindungsmuffe eingebracht wird. Durch dieses Einbringen wird sich das Sperrelement bzw. der Sperrring lose in dem offenen Bereich bewegen und eine Einschraubbewegung wird durch das Sperrelement in keiner Weise beschränkt.

Indem, wie dies ebenfalls der Ausbildung gemäß der Erfindung entspricht, der Innendurchmesser des Sperrrings größer als der Innendurchmesser der Nut und kleiner als der Innendurchmesser der Vertiefung ist, wird der Sperrring während eines Einbringens sich lose in Nut eingelegt befinden und der Drehbewegung, insbesondere der Einschraubbewegung der Anker- bzw. Bohrstange in das Innere der Verbindungsmuffe folgen und diese Einschraubbewegung in keiner Weise behindern. Wenn eine derartige mit Sperrelement versehene Anker- bzw. Bohrstange nach Beendigung der Bohrarbeit wiederum aus einem Bohrloch entfernt werden soll, wird das Gestänge üblicherweise durch Umdrehen der Drehrichtung wieder aus der Verbindungsmuffe herausgeschraubt bzw. aus der Bohrkrone geschraubt oder gegebenenfalls geschraubt und gezogen, wobei die Gefahr besteht, dass sich die Verbindung zwischen den Bohrstangen oder Ankerstangen löst. Ein derartiges Lösen der Verbindung zwischen zwei Anker- bzw. Bohrstangen kann auch stattfinden, wenn das Anker- bzw. Bohrgestänge durch Anbringen einer weiteren Anker bzw. Bohrstange verlängert werden soll, wofür vor dem Anbringen der neuen Anker- bzw. Bohrstange die Bohrvorrichtung von dem Ende der Anker- bzw. Bohrstange gelöst werden muss. Bei einem derartigen Lösen wird wiederum die Drehrichtung der Bohrvorrichtung umgedreht, wodurch es zu einem unbeabsichtigten Lösen von Ankerstangen- bzw. Bohrstangenverbindungen, welche sich weiter innen im Berg befinden, kommen kann. Mit der erfindungsgemäßen Ausbildung des Vorsehens eines Sperrelements, insbesondere eines Sperrrings, welcher in der Nut größerer Vertiefung eingelegt ist, wird beim Umdrehen einer Drehrichtung des Bohrgestänges der Sperrring, welcher lose in der Nut liegt, zwischen den Gewindegängen eingeklemmt und dadurch in die Vertiefung geringerer Tiefe bzw. die ringförmige Vertiefung eingezwängt. Sobald der Ring in die Vertiefung geringerer Tiefe gezwängt ist, wird durch diese Aktivierung des Sperrrings jede weitere Drehbewegung einer Anker bzw. Bohrstange in einer Verbindungsmuffe behindert bzw. gesperrt und ein Lösen von sich bereits im Berg befindlichen Anker bzw. Bohrstangen oder dgl. mit Sicherheit verhindert.

Indem, wie dies einer Weiterbildung der Erfindung entspricht, die Ausbildung so getroffen ist, dass der Sperrring ein mit einem runden, ovalen oder einen zum Äußeren gerichteten abgerundeten Oberflächenbereich aufweisenden Querschnitt ausgebildet ist, gelingt es, während eines Einschraubens der Anker- bzw. Bohrstange in die Verbindungsmuffe den Sperrring an dem jeweiligen dem Sperrring benachbarten Gewinde zu führen und überdies eine Anpassung des Sperrrings an das Gewinde zu ermöglichen und gleichzeitig bei einer entgegengesetzten Drehbewegung ein Einklemmen des Sperrrings zwischen der Vertiefung geringerer Tiefe und dem benachbarten Gewinde sicherzustellen, ohne dass es zu einer Beschädigung des Sperrrings oder des Gestänges kommen würde.

Der Sperrring ist ein aufweitbarer Ring, insbesondere elastisch aufweitbarer oder mechanisch aufweitbarer Ring, vorzugsweise Sprengring. Indem der Sperrring ein elastisch oder mechanisch aufweitbarer Sperrring ist, wird sichergestellt, dass er während des Einbringens einer Anker- bzw. Bohrstange in die Verbindungsmuffe immer in Anlage an dem benachbarten Gewinde ist und somit nicht unbeabsichtigt zwischen Gewindegängen eingeklemmt wird und andererseits ist es mit einem derartig elastisch bzw. mechanisch aufweitbaren Ring weiterhin möglich, diesen beispielsweise auch in der Nut größerer Tiefe der Anker bzw. Bohrstange vor dem Einbringen in die Verbindungsmuffe zu positionieren, ohne ihn zu zerstören, was zu einer Vereinfachung der Herstellung der erfindungsgemäßen Anker- bzw. Bohrstangenverbindung beiträgt. Hierbei kann der Sperrring ein Ring aus glasfaserverstärktem Kunststoff, Kohlefasermaterial, Federstahl, rückstellfähigem Nichteisen-metall oder ein Sprengring aus einem beliebigen rückstellfähigen Material oder einem beliebigen geeigneten Metall sein.

Indem, wie dies einer Weiterbildung der Erfindung entspricht, jede Anker- bzw. Bohrstange wenigstens ein verjüngtes, einen Innendurchmesser des Sperrrings nicht übersteigendes Ende aufweist, wird für das Ausbilden einer Anker- bzw. Bohrstangenverbindung, insbesondere einer verriegelnden Verbindung gemäß der Erfindung vor dem Einbringen der Anker bzw. Bohrstange das Sperrelement spannungsfrei auf das verjüngte Ende einer Anker bzw. Bohrstange aufgelegt und diese in das Innere einer Verbindungsmuffe eingeschraubt. Wenn das verjüngte Ende derart ausgebildet ist, dass bei dieser Einschraubbewegung das Sperrelement in Verbindung mit dem benachbarten Gewinde ist, wird durch die Drehbewegung das Sperrelement so weit auf die Anker- bzw. Bohrstange gezogen, bis es in die für den Sperrring vorgesehene Vertiefung eindringt. Wenn der Sperrring weiterhin, wie ausgeführt, ein elastisch aufweitbarer Sperrring ist, wird er sich in der Vertiefung wieder auf seinen ursprünglichen Umfang zurückziehen und in der Vertiefung unverlierbar gehalten.

Um die Mitnahme eines Sperrrings von einem verjüngten Ende einer Anker- bzw. Bohrstange bis in dem Bereich der Vertiefung bzw. Nut sicher zu gewährleisten, ist gemäß einer Weiterbildung der Erfindung die Anker- bzw. Bohrstangenverbindung derart ausgebildet, dass jede Anker- bzw. Bohrstange in ihrem Endbereich eine Rampe aufweist und dass die Rampe einen sich kontinuierlich vergrößernden Durchmesser oder eine konvexe oder konkave Kontur mit einem einen Radius der Verbindungsmuffe übersteigenden Radius der Kontur aufweist. Durch Ausbildung der Rampe mit einem sich kontinuierlich vergrößernden Durchmesser oder einer konvexen oder konkaven Kontur mit einem einen Radius der Verbindungsmuffe übersteigenden Krümmungsradius wird die Mitnahme des Sperrrings, insbesondere die glatte Mitnahme ohne ein Verklemmen des Sperrrings zwischen benachbarten Gewindegängen mit Sicherheit hintangehalten.

Eine besonders einfache Art der erfindungsgemäßen Ausbildung wird dadurch gewährleistet, dass die ringförmige Vertiefung und die Nut in der Anker- bzw. Bohrstange ausgebildet sind und dass die Verbindungsmuffe mit je einem sich jeweils von dem freien Ende bis im Wesentlichen zur Längsmittelebene erstreckenden, durchgehenden Gewinde ausgebildet ist.

Um die Mitnahme des Sperrrings bis in die Vertiefungen bzw. die Nut größerer Tiefe sicherzustellen, ist die Erfindung dahingehend weitergebildet, dass die Verbindungsmuffe zu beiden Seiten der Längsmittelebene einen gewindefreien Bereich aufweist. Indem die Verbindungsmuffe an beiden Seiten der Längsmittelebene einen gewindefreien Bereich aufweist, wird ein Anschlag ausgebildet, an welchem die Anker- bzw. Bohrstange bei ihrem Einschrauben anschlägt und durch welchen gewindefreien Bereich der Sperrring bzw. das Sperrelement beispielsweise über die Rampe oder über den nächsten Gewindegang der Anker bzw. Bohrstange in die für den Sperrring vorgesehenen Vertiefung bzw. dem Bereich größerer Tiefe gezwängt wird.

Indem, wie dies einer Weiterbildung der Erfindung entspricht, die Ankerstangen- bzw. Bohrstangenverbindung derartig ausgebildet ist, dass die Verbindungsmuffe weiterhin zu beiden Seiten der Längsmittelebene eine weiter in Richtung zu den freien Enden der Verbindungsmuffe positionierte Vertiefung aufweist, wird sichergestellt, dass, wenn der Sperrring in unbeabsichtigter Weise zu weit auf das Gewinde der Anker- bzw. Bohrstange bzw. zu weit in das Gewinde der Verbindungsmuffe gezogen wird, bei Erreichen der weiteren Vertiefung ein weiteres Mitziehen bzw. Einklemmen hintangehalten ist. Mit einer derartigen Ausbildung gelingt es, das Zerstören bzw. Zerreißen des Sperrrings mit Sicherheit hintanzuhalten und gleichzeitig eine kostengünstige und insbesondere langzeitig vollständig funktionsfähige Verbindung zur Verfügung zu stellen.

Indem, wie dies einer Weiterbildung der Erfindung entspricht, dass die Vertiefung geringerer Tiefe, die Nut und die Vertiefung an der Verbindungsmuffe ausgebildet sind, kann eine besonders einfache Konstruktion der Ankerstange bzw. Bohrstange zur Verfügung gestellt werden, und gleichzeitig wird eine sichere Mitnahme des Sperrrings in die hierfür vorgesehene Position in der Verbindungsmuffe gewährleistet. Wenn die Anker- bzw. Bohrstange zusätzlich eine Rampe aufweist bzw. die Verbindungsmuffe einen Anschlag aufweist, wird eine sichere und glatte Mitnahme des Sperrrings in die hierfür gewünschte Position gewährleistet.

Um ein unbeabsichtigtes zu tiefes Einschrauben einer Anker- bzw. Bohrstange in das Innere einer Verbindungsmuffe zu verhindern, ist die Erfindung bevorzugt so weitergebildet, dass die Verbindungsmuffe zwei zueinander versetzt verlaufende Gewinde aufweist. Eine Verbindungsmuffe, welche bis zu einer Längsmittelebene das verlaufende Gewinde aufweist, weist an ihrer Längsmittelebene eine natürliche Sperrstellung auf und verhindert ein zu tiefes Eindrehen einer Anker- bzw. Bohrstange.

Für eine sichere Mitnahme beispielsweise über die Rampe einer Anker- bzw. Bohrstange des Sperrglieds ist die Erfindung dahingehend weitergebildet, dass die Verbindungsmuffe zu beiden Seiten der Längsmittelebene einen sich radial in Richtung zu einer Drehachse der Verbindungsmuffe bis zur Höhe der Gewindespitzen der Verbindungsmuffe erstreckende Anschlagbereiche aufweist. Indem die Verbindungsmuffe zu beiden Seite der Längsmittelebene eine sich radial in beiden Richtungen zur Drehachse der Verbindungsmuffe bis zur Höhe der Gewindespitzen der Verbindungsmuffe erstreckende Anschlagbereiche aufweist, wird ein Beschädigen durch zu starkes Klemmen des Sperrrings in diesem Bereich mit Sicherheit hintangehalten und in die in der Anker- bzw. Bohrstange oder dem Verbindungselement vorgesehene Vertiefungen eingelegt bzw. eingebracht wird.

Die Erfindung wird nachfolgend anhand von in der Zeichnung dargestellten Ausführungsbeispielen näher erläutert. In diesen zeigt:
Fig. 1 eine erste Ausbildung einer Ankerstangen- bzw. Bohrstangenverbindung, welche sowohl die Position des Sperrrings während dem Eindrehen als auch während des Bohrens zeigt, Fig. 1 a das Detail des verlagerten Sperrrings während dem Eindrehen in vergrößertem Maßstab, Fig. 1b das Detail des Sperrrings während dem Bohren in vergrößertem Maßstab,
Fig. 2 die Ankerstangen- bzw. Bohrstangenverbindung gemäß Fig. 1, welche auf der rechten Seite zusätzlich die Position des Sperrrings während eines versuchten Herausdrehens der Anker bzw. Bohrstange aus der Verbindungsmuffe zeigt, und Fig. 2a das Detail der Ankerstangen- bzw. Bohrstangenverbindung während eines versuchten Herausdrehens der Anker bzw. Bohrstange aus der Verbindungsmuffe,
Fig. 3 eine andere Ausbildung der Ankerstangen- bzw. Bohrstangenverbindung gemäß der Erfindung, wobei in Fig. 3a die Position der Anker- bzw. Bohrstange während eines Einfädelns in die Verbindungsmuffe ist,
Fig. 4 eine andere Ausbildung der Ankerstangen- bzw. Bohrstangenverbindung gemäß der Erfindung, wobei Fig. 4a die Anker bzw. Bohrstange während des Bohrens und Fig. 4b die Anker- bzw. Bohrstange während eines versuchten Herausdrehens derselben aus der Verbindungsmuffe darstellt, und
Fig. 5 eine andere Ausbildung der Anker- bzw. Bohrstangenverbindung gemäß der Erfindung im eingeschraubten Zustand der Anker- bzw. Bohrstange.

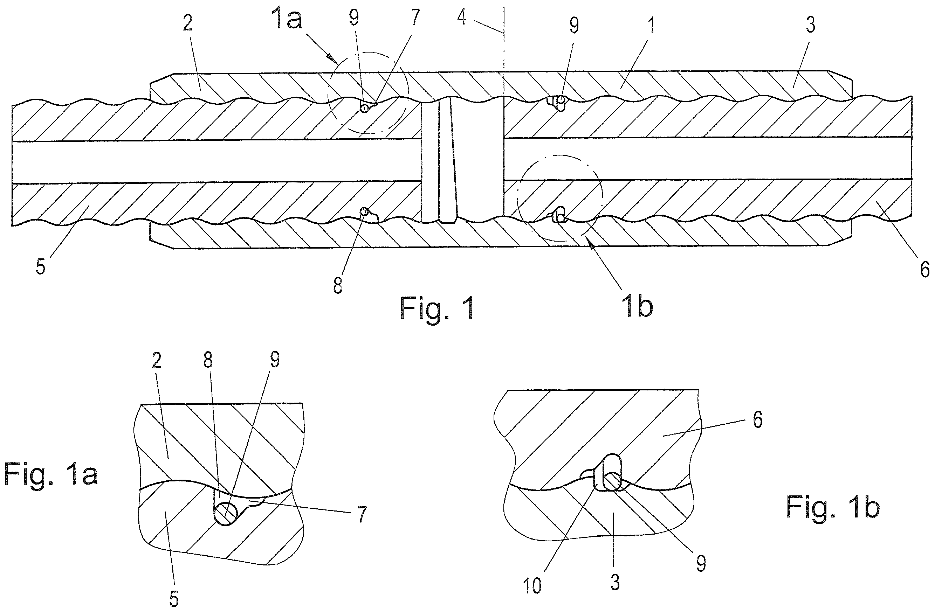

Im Einzelnen ist in Fig. 1 eine Verbindungsmuffe 1 dargestellt, welche von ihren jeweiligen freien Enden ausgehend ein Innengewinde 2 und 3 aufweist, welches Innengewinde jeweils bis zur Längsmittelebene 4 reicht. Die Gewinde 2 und 3 sind bei der Ausbildung von Fig. 1 so ausgebildet, dass die Gewindegänge gegeneinander versetzt sind, wodurch ein zu tiefes Eindrehen der Anker- bzw. Bohrstangen 5 und 6 hintangehalten wird. Die Anker- bzw. Bohrstangen 5 und 6 weisen, wie dies in der Folge in Fig. 1a bzw. 1b deutlicher erkennbar ist, jeweils einen vertieften Bereich auf, welcher einerseits aus einer Vertiefung geringerer Tiefe 7 und einer Vertiefung größerer Tiefe 8 ausgebildet ist. In die Vertiefung 8 ist ein Sperrring 9 eingelegt, welcher sich in seiner Einschraubposition befindet. D.h. der Sperrring 9 ist vollständig in die Nut größerer Tiefe 8 hineingezwängt bzw. versenkt und behindert eine Einschraubbewegung der Anker- bzw. Bohrstange 5 in Bezug auf die Verbindungsmuffe 1 bzw. in Bezug auf das Innengewinde 2 der Verbindungsmuffe 1 nicht. Sobald die tiefste Stelle der Verbindungsmuffe 1, bis zu welcher die Anker bzw. Bohrstange eingeschraubt werden kann, erreicht ist, geht der Sperrring 9 aufgrund seiner Rückstellkraft in die Arbeitsstellung über, wie dies auf der rechten Seite der Fig. 1 bzw. in vergrößertem Maßstab in Fig. 1b dargestellt ist. In der Arbeitsstellung bzw. Bohrstellung der Anker bzw. Bohrstange 6 ist der Sperrring 9 aus einem belastenden Zustand in einen entlasteten Zustand übergegangen, d.h. entweder im Falle eines Sprengrings ist er von der komprimierten Stellung auf die aufgeweitete, spannungsfreie Stellung aufgrund der konstruktiven Ausbildungen der Vertiefungen und der in diesem Bereich fehlenden Gewindespitzen zurückgegangen oder aber beispielsweise ein elastisch komprimierter Sperrring ist in seinen Grundzustand rückgeführt worden. In der in Fig. 1b dargestellten Position wirkt der Sperrring 9 mit einer Ausnehmung 10, welche in der Verbindungsmuffe 1 vorgesehen ist, Wechsel, so dass der Sperrring 9 vollständig spannungsfrei in der entsprechenden Ausnehmung liegt.

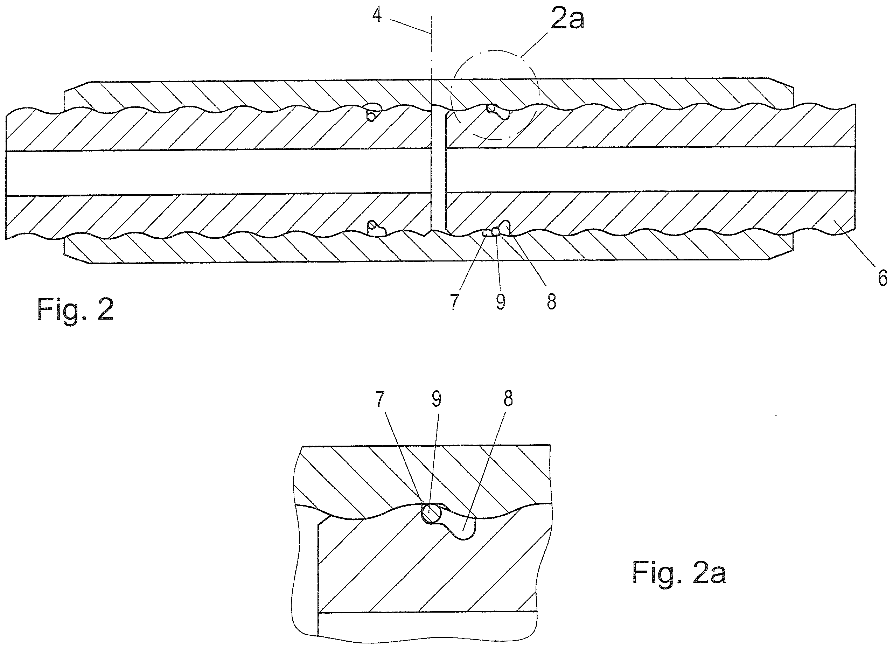

In der Darstellung von Fig. 2 ist auf der linken Seite wiederum die Position von Fig. 1b dargestellt und auf der rechten Seite ist diejenige Position dargestellt, in welcher versucht wird, die Anker- bzw. Bohrstange 6 aus dem Inneren der Verbindungsmuffe 1 herauszudrehen. Während des Drehens aus der Muffe heraus, d.h. beispielsweise wenn versucht wird, das Anker- bzw. Bohrgestänge durch Lösen der Bohrvorrichtung von dem Anker- bzw. Bohrgestänge zu verlängern oder wenn versucht werden soll, das Anker- bzw. Bohrgestänge in Bezug auf eine Drehrichtung für ein Einbringen aus dem Inneren einer Bohrkrone herauszudrehen, d.h. in einer Position, in welcher ein entgegen gesetztes Drehmoment auf die Bohrstange 6 ausgeübt wird, wird der Sperrring 9 aufgrund der Tatsache, dass er einen geringfügig größeren Durchmesser als der Innendurchmesser der Nut größerer Tiefe 8 aufweist, in dem Bereich der Vertiefung mit geringerer Tiefe 7 gezwängt, welcher Bereich eine zu geringe Tiefe hat, um den Ring zur Gänze aufzunehmen. Durch das Pressen des Sperrrings 9 in dem Bereich geringerer Tiefe 7 wird die weitere Verdrehung der Anker- bzw. Bohrstange 6 in Bezug auf die Verbindungsmuffe 1 verhindert und ein unbeabsichtigtes Herausdrehen der Anker- bzw. Bohrstange 6 aus dem Inneren der Verbindungsmuffe 1 hintangehalten.

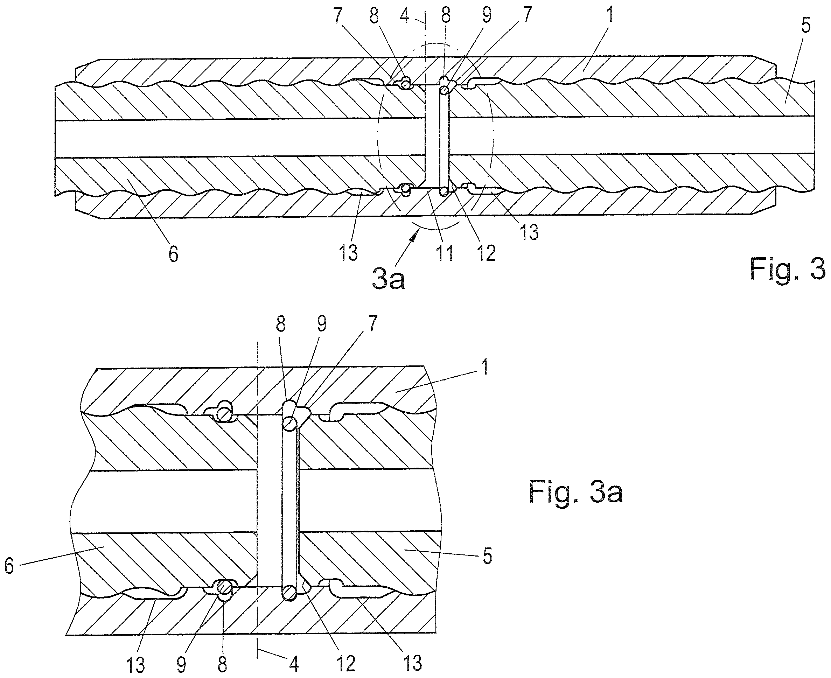

In der Darstellung gemäß Fig. 3, in welcher die Bezugszeichen der Fig. 1 und 2 so weit als möglich beibehalten wurden, ist auf der linken Seite die Ankerstangen- bzw. Bohrstangenverbindungsvorrichtung in der Bohrstellung dargestellt und auf der rechten Seite die Ankerstangen- bzw. Bohrstangenverbindungsvorrichtung in der Position, in welcher der Sperrring 9 noch nicht über die Anker- bzw. Bohrstange 5 liegend angeordnet ist. In dieser Stellung wird die Anker- bzw. Bohrstange 5 in das Innere der Verbindungsmuffe 1 eingeschraubt, wobei die Verbindungsmuffe 1 im Bereich ihrer Längsmittelebene 4 mit einem gewindefreien Bereich 11 ausgebildet ist. Beim Einbringen der Anker- bzw. Bohrstange 5 ist der Sperrring 9 auf einen konisch verjüngten Bereich bzw. eine Rampe 12 der Bohr- bzw. Ankerstange 5 aufgelegt und wird, nachdem dieser konisch verjüngte Bereich bzw. die Rampe 12 durch Einschrauben der Bohr- bzw. Ankerstange 5 in das Innere der Verbindungsmuffe unter den gewindefreien Bereich 11 eingetaucht, durch die Wirkung als Anschlag des gewindefreien Bereichs 11 auf Anker- bzw. Bohrstange 5 und insbesondere auf den als Rampe 12 ausgebildeten abgeschrägten Bereich den Sperrring 9 auf die Rampe 12 hinaufzwingen. Bei einem weiteren Einschrauben der Bohr- bzw. Ankerstange 5 der Sperrring 9 vollständig über die Rampe hinaufgehoben und in der Folge über den Scheitel der Rampe gehoben bzw. geschoben, worauf der Sperrring 9 in der Nut größerer Tiefe 8 zu liegen kommt und sich in dieser Nut aufweiten und in der Bohrstellung befinden, wie dies der linken der Fig. 3 zu entnehmen ist. Bei der Darstellung gemäß Fig. 3, insbesondere auf der rechten Seite der Fig. 3 ist weiterhin ersichtlich, dass in der Verbindungsmuffe 1 eine zusätzliche Ausnehmung 13 ausgebildet ist, welche frei von einem Gewinde ist, um den Halt der Bohrstange 5 im Inneren der Verbindungsmuffe 1 noch weiter zu verbessern. In Fig. 3a ist das Detail des Sperrrings 9 sowohl in der Bohrstellung als auch in der "Einfädelstellung" größer herausgezeichnet, wobei eine gesonderte Beschreibung der Fig. 3a entbehrlich erscheint, da die auf der linken Seite der Fig. 3a dargestellte Bohrstellung des Ankerstangen- bzw. Bohrstangenverbindungsvorrichtung der in FIG. 1 b geschilderten Bohrstellung entspricht, so dass weitere Ausführungen hierzu vermieden werden können.

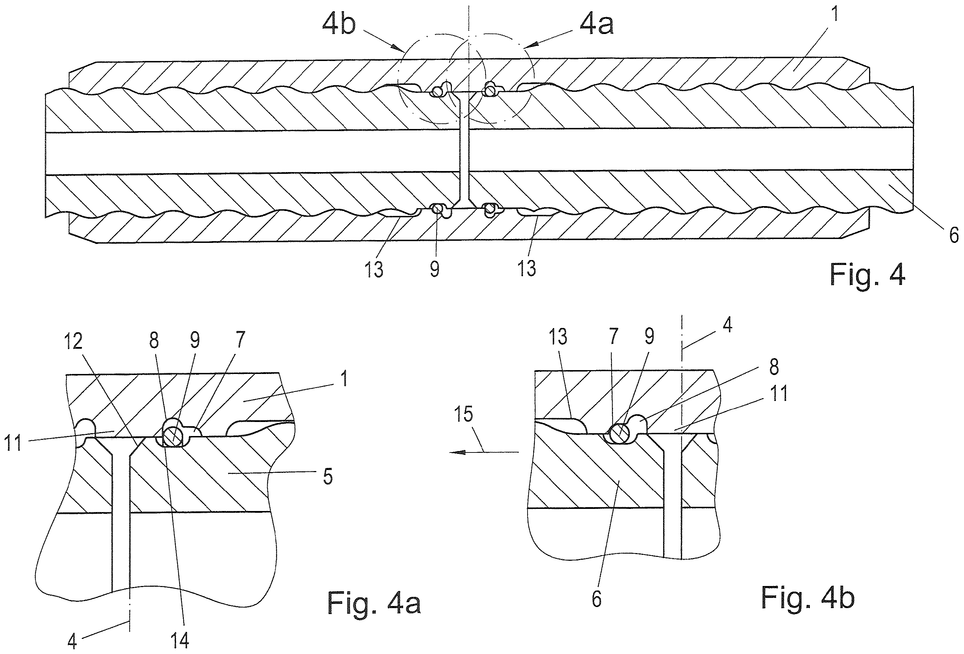

In Fig. 4 ist nunmehr auf der linken Seite die Position des Sperrrings 9 nach einem "Einfädeln" über den abgeschrägten Teil 12 der Bohrstange 5 gezeigt und in Fig. 4b die Position des Sperrrings 9 bei einem versuchten Herausdrehen der Anker- bzw. Bohrstange 6 aus der Verbindungsmuffe 1, wobei auch in der Darstellung von Fig. 4 der gewindefreie Bereich 11 benachbart der Längsmittelebene 4 der Verbindungsmuffe 1 eindeutig erkennbar ist, mit welchem gewindefreien Bereich ein Verlagern durch Anheben des Sperrrings 9 entlang der Rampe 12 in die Vertiefungen 7, 8, welche in Fig. 4a in der Verbindungsmuffe ausgebildet sind, sowie in eine zusätzliche Vertiefung 14, welche dem Bereich des freien Endes der Bohrstange bzw. Ankerstange 6 ausgebildet ist, ausgeführt wird.

In Fig. 4b ist wiederum die Anker- bzw. Bohrstangenverbindungsvorrichtung in der Position gezeigt, in welcher versucht wird, die Anker bzw. Bohrstange 6 aus dem Inneren der Verbindungsmuffe 1 herauszuschrauben. Bei einer Bewegung gemäß des Pfeils 15 der Anker- bzw. Bohrstange 6 wird das Sperrelement bzw. der Sperrring 9 in die Nut geringer Tiefe 7 gezwungen und somit aktiviert und wird dort aufgrund der Reibung und des Formschlusses zwischen der Anker bzw. Bohrstange 6 bzw. der Verbindungsmuffe 1 eine weitere Bewegung der Anker- bzw. Bohrstange 6 in Richtung des Pfeils 15 mit Sicherheit hintanhalten.

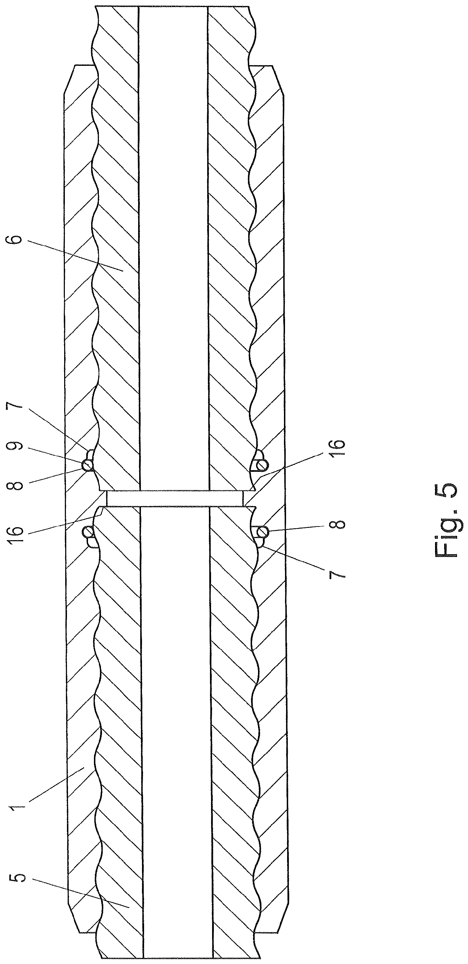

In Fig. 5 ist eine weitere Ausbildung einer Anker- bzw. Bohrstangenverbindungsvorrichtung in der eingeschraubten Position dargestellt, wobei die in Fig. 5 eingesetzte Anker- bzw. Bohrstange eine herkömmliche Anker- bzw. Bohrstange ohne jegliche Ausnehmungen ist. Diese Bohrstange ist insbesondere ohne Abschrägung an ihren Enden ausgebildet. Die Nut größerer Tiefe 8 bzw. die Nut geringerer Tiefe 7 sind beide in der Verbindungsmuffe 1 ausgebildet. Für ein Einbringen der Anker- bzw. Bohrstange 5 in die Verbindungsmuffe 1 wird hierbei vor einem Einbringen der Anker- bzw. Bohrstange 5 der Sperrring 9 in die Nut größerer Tiefe 8 der Verbindungsmuffe 1 spannungsfrei eingelegt und in der Folge die Anker- bzw. Bohrstange in die Muffe eingeschraubt bis die Anker- bzw. Bohrstange an einem im Inneren der Verbindungsmuffe 1 ausgebildeten Anschlag 16 in Anlage gelangt. Durch den Anschlag 16 ist ein weiteres Einschrauben der Anker- bzw. Bohrstange 5 in das Innere der Verbindungsmuffe 1 verhindert. Wenn bei einem Ändern der Drehrichtung die Anker- bzw. Bohrstange 5 theoretisch wieder aus der Verbindungsmuffe 1 rausgeschraubt werden könnte, wird der Sperrring 9 aus der Nut größerer Tiefe 8 in die Nut geringerer Tiefe 7 bzw. in die Vertiefung 7 gezwängt und verhindert auf Grund der auftretenden Reibungskräfte bzw. des Klemmens des Sperrrings 9 in der Nut geringerer Tiefe 7, dass die Anker- bzw. Bohrstange 5 weiter aus der Verbindungsmuffe 1 herausgeschraubt werden kann.

## Patentansprüche

1. Ankerstangen- bzw. Bohrstangenverbindung, umfassend zwei jeweils wenigstens ein mit einem Gewinde versehenen Endbereich aufweisende miteinander zu verbindende Anker- bzw. Bohrstangen (5, 6), eine mit den Endbereichen der Anker- bzw. Bohrstangen (5, 6) wechselwirkende, von ihren freien Enden ausgehend jeweils ein zu den Gewinden der Anker- bzw. Bohrstangen (5, 6) komplementäres Innengewinde aufweisende Verbindungsmuffe (1) sowie jeweils ein mit jeder Anker- bzw. Bohrstange (5, 6) und dem zugehörigen komplementären Innengewinde wechselwirkendes Sperrelement, **dadurch gekennzeichnet, dass** die Verbindungsmuffe (1) in Abstand von einer Längsmittelebene (4) derselben zu beiden Seiten derselben jeweils eine ringförmig verlaufende Vertiefung (7, 8) aufweist oder jeder Endbereich einer Anker- bzw. Bohrstange (5, 6) in Abstand von einem freien Ende derselben eine ringförmige Vertiefung aufweist, dass jede ringförmige Vertiefung eine zu der Längsmittelebene (4) oder dem freien Bereich der Anker- bzw. Bohrstange (5, 6) gerichtete Vertiefung geringerer Tiefe (7) und eine an die Vertiefung geringerer Tiefe (7) in Richtung zu der Längsmittelebene (4) der Verbindungsmuffe (1) oder den freien Enden der Anker- bzw. Bohrstange (5, 6) weiter als die Vertiefung geringerer Tiefe (7) beabstandeten an die jeweilige Vertiefung geringerer Tiefe (7) anschließende Nut größerer Tiefe (8) als die Vertiefung geringerer Tiefe (7) aufweist, dass das Sperrelement als in die Vertiefung einpassbarer Sperrring (9) ausgebildet ist und dass ein Innendurchmesser des Sperrrings (9) größer als ein Innendurchmesser der Nut (8) und kleiner als ein Innendurchmesser der Vertiefung geringerer Tiefe (7) ist.

2. Ankerstangen- bzw. Bohrstangenverbindung nach Anspruch 1, **dadurch gekennzeichnet, dass** der Sperrring (9) ein mit einem runden, ovalen oder einen zum Äußeren gerichteten abgerundeten Oberflächenbereich aufweisenden Querschnitt ausgebildet ist.

3. Ankerstangen- bzw. Bohrstangenverbindung nach Anspruch 1 oder 2, **dadurch gekennzeichnet, dass** der Sperrring (9) als aufweitbarer Ring, insbesondere elastisch aufweitbarer oder mechanisch aufweitbarer Ring, vorzugsweise Sprengring ist.

4. Ankerstangen- bzw. Bohrstangenverbindung nach Ansprüche 1, 2 oder 3, **dadurch gekennzeichnet, dass** jede Anker- bzw. Bohrstange (5, 6) wenigstens ein verjüngtes, einen Innendurchmesser des Sperrrings (9) nicht übersteigendes Ende aufweist.

5. Ankerstangen- bzw. Bohrstangenverbindung nach einem der Ansprüche 1 bis 4, **dadurch gekennzeichnet, dass** jede Anker- bzw. Bohrstange (5, 6) in ihrem Endbereich eine Rampe (12) aufweist und dass die Rampe (12) einen sich kontinuierlich vergrößernden Durchmesser oder eine konvexe oder konkave Kontur mit einem einen Radius der Verbindungsmuffe (1) übersteigenden Krümmungsradius aufweist.

6. Ankerstangen- bzw. Bohrstangenverbindung nach einem der Ansprüche 1 bis 5, **dadurch gekennzeichnet, dass** die Vertiefung geringerer Tiefe (7) und die Nut (8) in der Anker- bzw. Bohrstange (5, 6) ausgebildet sind und dass die Verbindungsmuffe (1) mit je einem sich jeweils von dem freien Ende bis im Wesentlichen zur Längsmittelebene (4) erstreckenden, durchgehenden Gewinde ausgebildet ist.

7. Ankerstangen- bzw. Bohrstangenverbindung nach Anspruch 6, **dadurch gekennzeichnet, dass** die Verbindungsmuffe (1) zu beiden Seiten der Längsmittelebene (4) einen gewindefreien Bereich (11) aufweist.

8. Ankerstangen- bzw. Bohrstangenverbindung nach Anspruch 6 oder 7, **dadurch gekennzeichnet, dass** die Verbindungsmuffe (1) zu beiden Seiten der Längsmittelebene (4) einen sich radial in Richtung zu einer Drehachse der Verbindungsmuffe (1) bis zur Höhe der Gewindespitzen der Verbindungsmuffe (1) erstreckenden Anschlag (16) aufweist.

9. Ankerstangen- bzw. Bohrstangenverbindung nach einem der Ansprüche 1 bis 8, **dadurch gekennzeichnet, dass** die Verbindungsmuffe (1) weiterhin zu beiden Seiten der Längsmittelebene (4) eine in Richtung zu den freien Enden der Verbindungsmuffe (1) positionierte Vertiefung (14) aufweist.

10. Ankerstangen- bzw. Bohrstangenverbindung nach Anspruch 9, **dadurch gekennzeichnet, dass** die Vertiefung geringerer Tiefe (7), die Nut (8) und die Vertiefung (14) an der Verbindungsmuffe (1) ausgebildet sind.

11. Ankerstangen- bzw. Bohrstangenverbindung nach einem der Ansprüche 1 bis 10, **dadurch gekennzeichnet, dass** die Verbindungsmuffe (1) zwei zueinander versetzt verlaufende Gewinde aufweist.

## Claims

1. An anchor rod or drill rod connection, including two anchor rods or drill rods (5, 6) that are to be connected to each other and each have at least one threaded end region, a connecting sleeve (1) interacting with the end regions of the anchor rods or drill rods (5, 6) and having an internal thread each departing from its free ends and being complementary to the respective thread of the anchor rods or drill rods (5, 6), and a locking element each interacting with the respective one of the anchor rod or drill rods (5, 6) and the associated complementary internal thread, **characterized in that** the connecting sleeve (1), at a distance from a longitudinal central plane (4) of the same, comprises an annularly extending recess (7, 8) on both sides thereof, or each end region of an anchor rod or drill rod (5, 6) comprises an annular recess at a distance from a free end of the same, that each annular recess comprises a smaller-depth recess (7) facing the longitudinal central plane (4) or the free region of the anchor rod or drill rod (5, 6), respectively, and a groove (8) with a larger depth than the smaller-depth recess (7) adjoining the respective smaller-depth recess (7) and spaced further to the smaller-depth recess (7) in the direction towards the longitudinal central plane (4) of the connecting sleeve (1) or the free ends of the anchor rod or drill rod (5, 6), respectively, that the locking element is designed as a locking ring (9) capable of being fitted into the recess, and that an inner diameter of the locking ring (9) is larger than an inner diameter of the groove (8) and smaller than an inner diameter of the smaller-depth recess (7).

2. An anchor rod or drill rod connection according to claim 1, **characterized in that** the locking ring (9) is designed with a cross section having a round, oval or outwardly oriented, rounded surface region.

3. An anchor rod or drill rod connection according to claim 1 or 2, **characterized in that** the locking ring (9) is comprised of an expandable ring, in particular elastically expandable or mechanically expandable ring, preferably a snap ring.

4. An anchor rod or drill rod connection according to claim 1, 2 or 3, **characterized in that** each of the anchor rods or drill rods (5, 6) has at least one tapered end not exceeding an inner diameter of the locking ring (9).

5. An anchor rod or drill rod connection according to any one of claims 1 to 4, **characterized in that** each of the anchor rods or drill rods (5, 6) comprises a ramp (12) in its end region, and the ramp (12) has a continuously increasing diameter or a convex or concave contour with a radius of curvature exceeding a radius of the connecting sleeve (1).

6. An anchor rod or drill rod connection according to any one of claims 1 to 5, **characterized in that** the smaller-depth recess (7) and the groove (8) are formed in the anchor rod or drill rod (5, 6), and the connecting sleeve (1) is each designed with a continuous thread each extending from the free end as far as substantially to the longitudinal central plane (4).

7. An anchor rod or drill rod connection according to claim 6, **characterized in that** the connecting sleeve (1) comprises a thread-free region (11) on both sides of the longitudinal central plane (4).

8. An anchor rod or drill rod connection according to claim 6 or 7, **characterized in that** the connecting sleeve (1), on both sides of the longitudinal central plane (4), comprises a stop (16) extending radially towards an axis of rotation of the connecting sleeve (1) as far as to the height of the thread tips of the connecting sleeve (1).

9. An anchor rod or drill rod connection according to any one of claims 1 to 8, **characterized in that** the connecting sleeve (1), on both sides of the longitudinal central plane (4), further comprises a recess (14) positioned towards the free ends of the connecting sleeve (1).

10. An anchor rod or drill rod connection according to claim 9, **characterized in that** the smaller-depth recess (7), the groove (8) and the recess (14) are formed on the connecting sleeve (1).

11. An anchor rod or drill rod connection according to any one of claims 1 to 10, **characterized in that** the connecting sleeve (1) comprises two mutually offset threads.

## Revendications

1. Raccordement de tiges d'ancrage ou de forage, comprenant deux tiges d'ancrage ou de forage (5, 6) à relier l'une à l'autre et présentant respectivement au moins une zone d'extrémité munie d'un filetage, un manchon de raccordement (1) coopérant avec les zones d'extrémité des tiges d'ancrage ou de forage (5, 6) et présentant respectivement à partir de ses extrémités libres un taraudage complémentaire aux filetages des tiges d'ancrage ou de forage (5, 6), ainsi qu'un élément de blocage coopérant respectivement avec chaque tige d'ancrage ou de forage (5, 6) et le taraudage complémentaire associé, **caractérisé en ce que** le manchon de raccordement (1) présente respectivement un renfoncement (7, 8) s'étendant de manière annulaire à distance d'un plan médian longitudinal (4) de celui-ci des deux côtés de celui-ci, ou chaque zone d'extrémité d'une tige d'ancrage ou de forage (5, 6) présente un renfoncement annulaire à distance d'une extrémité libre de celle-ci, que chaque renfoncement annulaire présente un renfoncement de moindre profondeur (7) orienté vers le plan médian longitudinal (4) ou la zone libre de la tige d'ancrage ou de forage (5, 6) et une rainure de profondeur plus grande (8) que le renfoncement de moindre profondeur (7) adjacente au renfoncement de moindre profondeur (7) en direction du plan médian longitudinal (4) du manchon de raccordement (1) ou des extrémités libres de la tige d'ancrage ou de forage (5, 6) à une plus grande distance que le renfoncement de moindre profondeur (7) au niveau du renfoncement de moindre profondeur (7) respectif, que l'élément de blocage est réalisé sous la forme d'une bague de blocage (9) pouvant être adaptée au renfoncement, et qu'un diamètre intérieur de la bague de blocage (9) est plus grand qu'un diamètre intérieur de la rainure (8) et plus petit qu'un diamètre intérieur du renfoncement de moindre profondeur (7).

2. Raccordement de tiges d'ancrage ou de forage selon la revendication 1, **caractérisé en ce que** la bague de blocage (9) est réalisée avec une section transversale ronde, ovale ou présentant une zone de surface arrondie orientée vers l'extérieur.

3. Raccordement de tiges d'ancrage ou de forage selon la revendication 1 ou 2, **caractérisé en ce que** la bague de blocage (9) est réalisée sous la forme d'une bague extensible, en particulier une bague extensible de manière élastique ou extensible de manière mécanique, de préférence un circlip.

4. Raccordement de tiges d'ancrage ou de forage selon les revendications 1, 2 ou 3, **caractérisé en ce que** chaque tige d'ancrage ou de forage (5, 6) présente au moins une extrémité rétrécie qui ne dépasse pas un diamètre intérieur de la bague de blocage (9).

5. Raccordement de tiges d'ancrage ou de forage selon l'une des revendications 1 à 4, **caractérisé en ce que** chaque tige d'ancrage ou de forage (5, 6) présente une rampe (12) dans sa zone d'extrémité et que la rampe (12) présente un diamètre qui s'élargit de façon continue ou un contour convexe ou concave avec un rayon de courbure qui dépasse un rayon du manchon de raccordement (1).

6. Raccordement de tiges d'ancrage ou de forage selon l'une des revendications 1 à 5, **caractérisé en ce que** le renfoncement de moindre profondeur (7) et la rainure (8) sont réalisés dans la tige d'ancrage ou de forage (5, 6) et que le manchon de raccordement (1) est réalisé avec un filetage continu s'étendant respectivement depuis l'extrémité libre jusqu'à sensiblement le plan médian longitudinal (4).

7. Raccordement de tiges d'ancrage ou de forage selon la revendication 6, **caractérisé en ce que** le manchon de raccordement (1) présente une zone non filetée (11) des deux côtés du plan médian longitudinal (4).

8. Raccordement de tiges d'ancrage ou de forage selon la revendication 6 ou 7, **caractérisé en ce que** le manchon de raccordement (1) présente des deux côtés du plan médian longitudinal (4) une butée (16) s'étendant radialement en direction d'un axe de rotation du manchon de raccordement (1) jusqu'à la hauteur des pointes de filetage du manchon de raccordement (1).

9. Raccordement de tiges d'ancrage ou de forage selon l'une des revendications 1 à 8, **caractérisé en ce que** le manchon de raccordement (1) présente en outre des deux côtés du plan médian longitudinal (4) un renfoncement (14) positionné en direction des extrémités libres du manchon de raccordement (1).

10. Raccordement de tiges d'ancrage ou de forage selon la revendication 9, **caractérisé en ce que** le renfoncement de moindre profondeur (7), la rainure (8) et le renfoncement (14) sont réalisés au niveau du manchon de raccordement (1).

11. Raccordement de tiges d'ancrage ou de forage selon l'une des revendications 1 à 10, **caractérisé en ce que** le manchon de raccordement (1) présente deux filetages s'étendant de manière décalée l'un par rapport à l'autre.
